(19) Europäisches Patentamt / European Patent Office / Office européen des brevets

(11) **EP 4 091 085 B1**

(12) **EUROPEAN PATENT SPECIFICATION**

(45) Date of publication and mention
of the grant of the patent:
**23.04.2025 Bulletin 2025/17**

(21) Application number: **20913381.8**

(22) Date of filing: **17.01.2020**

(51) International Patent Classification (IPC):
$G06F\ 21/60^{(2013.01)}$     $H04L\ 9/08^{(2006.01)}$

(52) Cooperative Patent Classification (CPC):
**H04L 9/3255; H04L 9/3263; H04L 63/0823;
H04L 63/108; H04L 63/12; H04L 67/1034**

(86) International application number:
**PCT/US2020/014144**

(87) International publication number:
**WO 2021/145894 (22.07.2021 Gazette 2021/29)**

(54) **DIGITAL SIGNATURE SYSTEM USING RELIABLE SERVERS**

DIGITALES SIGNATURSYSTEM ANHAND ZUVERLÄSSIGER SERVER

SYSTÈME DE SIGNATURE NUMÉRIQUE UTILISANT DES SERVEURS FIABLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.11.2022 Bulletin 2022/47**

(73) Proprietor: **Planetway Corporation
San Jose, CA 95110 (US)**

(72) Inventors:
• **PRIISALU, Jaan**
  11415 Tallinn, OT (EE)
• **BULDAS, Ahto**
  11415 Tallinn, OT (EE)
• **SAAREPERA, Mart**
  11415 Tallinn, OT (EE)

(74) Representative: **Gille Hrabal
Partnerschaftsgesellschaft mbB
Patentanwälte
Brucknerstraße 20
40593 Düsseldorf (DE)**

(56) References cited:
EP-A1- 3 091 690        EP-B1- 2 582 115
US-A1- 2002 152 389     US-A1- 2002 184 504
US-A1- 2016 365 981     US-A1- 2017 141 924

• **CHEN TAO, ANGEHUN WANG; YONGLEI ZHOU:
"Combined digital signature and digital
watermark scheme for image authentication",
2001 INTERNATIONAL CONFERENCES ON
INFO-TECH AND INFO-NET, vol. 5, 2001, Beijing,
China, pages 78 - 82, XP010576967, Retrieved
from the Internet <URL:https://ieeexplore.ieee.
org/document/983498?section=abstract>
[retrieved on 20200320]**

## Description

## TECHNICAL FIELD

The present disclosure generally relates to secure electronic communication and electronic commerce and, more specifically, a digital signature system using reliable servers.

## BACKGROUND

Increasingly, documents are being signed digitally. Digital signatures employ systems that (a) authenticates a person signing the document is who they say they are when they sign and (b) validates that a signed document is authentic. In this manner, a person who is relying on the document can be certain that the document is authentic and the person who signed the document cannot deny that they signed it. These digital signature systems often use asymmetric cryptography which rely on a secret private key and a non-secret public key associated with an individual. To forge a signature, a malicious actor needs to obtain the secret key or spend the computational cost (if possible) of breaking the signature scheme (i.e. signing a message without having the private key). Attack tolerance to a digital signature system can be classified into mathematical tolerance (e.g., the ability to forge a digital signature by breaking the signature mathematically) or physical tolerance (e.g., tampering with a physical device to forge a signature, etc.). The growth of digital signatures is accompanied by the growth of public keys that need to be tracked and signature requests that need to be processed. As mathematical tolerance and physical tolerance increases, the need for reliable and scalable digital signature infrastructure will increase.

## SUMMARY

The appended claims define this application. The present disclosure summarizes aspects of the embodiments and should not be used to limit the claims. Other implementations are contemplated in accordance with the techniques described herein, as will be apparent to one having ordinary skill in the art upon examination of the following drawings and detailed description, and these implementations are intended to be within the scope of this application.

An example system for generating a digital signature includes a first backend server, a second backend server, and a frontend server. The frontend server receives a signature request from a remote application server. The signature request includes a first total public key with a cryptographically embedded first server identifier and a second total public key with a cryptographically embedded second server identifier. The frontend server extracts the cryptographically embedded first server identifier from the first total public key. The frontend server then forwards the signature request to first backend server that corresponds to the first server identifier. In response to determining that the first backend server is unavailable, the frontend server extracts the cryptographically embedded second server identifier from the second total public key, and forward the signature request to the second backend server that corresponds to the second server identifier. The responding backend server forwards the signature request to a plurality of remote security devices associated with the total public key. The backend server then receives a first signature from each of the plurality of remote security devices and generates a combined signature based on the first signatures. The backend server then generates the second signature based on the combined signature and a finalizing key. The finalizing key is cryptographically generated based on the server identifier of the backend server. The backend server forwards the second signature to the frontend server. The frontend server then forwards the second signature to the remote application server.

## BRIEF DESCRIPTION OF THE DRAWINGS

For a better understanding of the invention, reference may be made to embodiments shown in the following drawings. The components in the drawings are not necessarily to scale and related elements may be omitted, or in some instances proportions may have been exaggerated, so as to emphasize and clearly illustrate the novel features described herein. In addition, system components can be variously arranged, as known in the art. Further, in the drawings, like reference numerals designate corresponding parts throughout the several views.

FIG. 1 illustrates a system to implement a digital signature system using reliable servers in accordance with the teachings of this disclosure.
FIG. 2 illustrates a system that employs traditional asymmetric cryptography using a single private key.
FIG. 3 illustrates a system that employs split-key asymmetric cryptography that uses multiple private key shares that are dependent on a single private key.
FIG. 4 illustrates a system that employs composite-key asymmetric cryptography that uses multiple private keys that are independent of each other.
FIG. 5 illustrates a system that generates a total public key and a finalized signature using specific server information.
FIGS. 6A and 6B are block diagrams of the certificate authority, in cooperation with the signing authority, generating certificates to be associated with a user.
FIG. 7 is a block diagram of a system to generate multiple certificates associated with a user.
FIG. 8 is a block diagram of a system that uses redundant certificates associated with a user to generate a document signed by a digital signature.

FIG. 9 illustrates a security device implementing a device-side portion of the asymmetric cryptography of FIGS. 7 and 8.

FIG. 10 is a block diagram of electronic components of the secure device of FIG. 9.

FIG. 11 is a flowchart of a method to use redundant certificates associated with a user to generate a document signed by a digital signature, which may be implemented by the application server of FIGS. 1 and 8.

FIG. 12 is a flowchart of method to use redundant certificates associated with a user to generate a document signed by a digital signature, which may be implemented by the frontend server(s) of FIG. 8.

FIGS. 13 and 14 are flowcharts of methods to generate a signature for a digital documents which may be implemented by the system of FIGS. 1 and 8.

FIG. 15 is a flowchart of a method to reissue certificates.

## DETAILED DESCRIPTION OF EXAMPLE EMBODIMENTS

While the invention may be embodied in various forms, there are shown in the drawings, and will hereinafter be described, some exemplary and non-limiting embodiments, with the understanding that the present disclosure is to be considered an exemplification of the invention and is not intended to limit the invention to the specific embodiments illustrated.

With the rise of digital signatures, computer infrastructure is needed to robustly handle the task of generating large number of signatures daily. Signatures are often requested by third party application servers. For example, a signature may be required to acknowledge that a customer has read a website's privacy and personal data policy, or a signature may be required when a customer signs government documents, such as tax documents, or commercial contracts (e.g., mortgage applications, etc.). However, the third party application servers are independent from the digital signature scheme and are not equipped to handle the actual signature process. The signature generation process becomes more complicated when one or more physical security devices are used in the signature generating process. It is not practical for third party application servers to know how to contact the physical security devices. Additionally, as the role of digital signatures become ubiquitous, an infrastructure scheme is needed to add security devices and handle signature generation in a reliable manner. Additionally, a reliable system should be configured such that: (a) private keys are never transferred from the device on which they are created; and (b) when one server in the system is offline, a digital signature can still be created without disruption.

As described below, a Signature Authority (SA) includes backend servers and frontend servers. The backend servers perform signature functions and communicate with specific security devices and/or security tokens. Each backend server has a unique identifier (a "BESID"). The frontend servers communicate with third party application servers to handle signature requests. A customer registers with the Signature Authority. During the registry process, a customer associates themselves with one or more physical security devices and/or physical security tokens. The security device(s) and/or security token(s) are assigned to two or more backend servers so that those particular backend servers have the information necessary to communicate with the particular security device and/or security token. Additionally, those backend servers each use the security device and/or security token unique information to generate a certificate with a Certificate Authority (CA) that identifies the particular backend server.

When a composite key scheme is used, (a) the security devices generate a private key and a public key and provides the public key to the designated backend servers and/or, (b) when a security token is used, the assigned backend servers generate a private key and a public key associated with the customer. Using the two or more independent public keys, the backend servers each create a composite public key. The backend servers then each create a total public key based on the composite public key and the BESID. The backend servers each independently send the total public key, its BESID, and a unique client identifier (a "CID") the Certificate Authority (CA)). The Certificate Authority generates independent certificates associated with the CID. In some examples, the Certificate Authority (CA) designates one of the certificates as a "primary certificate" and the other certificate as a "secondary certificate." The Certificate Authority (CA) is a public repository of these certificates that supplies certificates in response to receiving a request that is accompanied by a CID.

When a split key scheme is used, each backend server generates two or more key shares and a public key. Each backend server shares one of the key shares with the security device and keeps one of the key shares. The security device stores each of the key shares associated with BESID of the backend server that generated it. The backend servers then each create a total public key based on the public key and their BESID. The backend servers each independently send the total public key, its BESID, and a unique client identifier (a "CID") the Certificate Authority (CA)).

The security devices may be any portable electronic device that is capable of (a) securely storing the independently generated private key, (b) receiving an input from a signer, (c) reliably authenticating the identity of the signer based on that input, (d) receiving a message to generate a signature, (e) generating the signature with the independently generated private key and the message, and (f) transmitting the signature to a computing device (e.g., a server, etc.) requesting the signature. In some examples, the security devices may be smartphones, smart watches, tablet computers, jewelry with embedded electronics (e.g., bracelets, rings, broaches, etc.), smart cards (e.g., a credit card, an identification card, etc.), and/or an electronic hanko, etc. In some examples, each security device is configured to physically receive an input (e.g., a biometric identifier such as a fingerprint, a password, etc.) from the signer independently from any other security device. In some examples, each security device communicates with computing device (e.g., via a wireless connection to the Internet, etc.). Alternatively, in some examples, one of the security devices acts as a primary device that communicates with the computing device (e.g., via a wireless connection to the Internet, etc.) while other security devices communicate with the primary device via a local area network (e.g., a wireless local area network, a Bluetooth® Low Energy connection, etc.) to communicate with the computing device.

The security token communicates directly or indirectly (e.g., via a mobile device) with the backend server to authenticate an identity of the customer when the backend server is generating a digital signature. The security token may be any mobile device that can communicate with the backend server and securely provide user credentials when the user provides authentication to the device. For example, the device may have biometric sensors and/or biometric input (e.g., a iris scanner, a finger printer scanner, etc.). As another example, the device may have a GPS and may rely on geofencing or its proximity to another device (e.g., a security device) in order to authenticate the user. In some examples, the security token may be another security device that is not involved in the current signature generation. In some examples, the security token is jewelry with embedded electronics (e.g., bracelets, rings, broaches, etc.) or a smart card (e.g., a credit card, an identification card, etc.).

When a digital signature is to be created, the customer provides credentials and/or the customer's CID to an application server (e.g., credential controlled by the application server to identify the customer). The application server uses the identity of the customer to retrieve multiple certificates from the Certificate Authority (CA). The application server has an established relationship with at least two frontend servers of the Signature Authority (e.g., established when the application server enrolls with the Signature Authority, etc.). In some examples, one of the frontend servers may be designated as a "primary server" and another one of the frontend servers may be designated as a "secondary server." When more than two frontend servers as associated with the application server, the Signature Authority (SA) may designate an order or priority for the backend servers. The application server sends a signature request to the primary (or first) frontend server. The signature request includes the multiple certificates retrieved from the Certificate Authority (CA) and a message. The message may be an original message (e.g., the digital document to be signed) or a message digest computed from the original message by applying a cryptographic hash function (e.g., SHA-256, etc.) to the original message. If the application server does not received an acknowledgement of its request from the primary frontend server within a threshold period of time (e.g., 500 milliseconds, one second, etc.), the application server resends the signature request to the secondary frontend servers. If there are more than two designated frontend servers, this process repeats until the application server receives an acknowledgement of its request. If no acknowledgement is received, the application server generates an error message to the user.

The frontend server extracts the BESID from the primary (or first) certificate and forwards the signature request to the backend server associated with the BESID. If the front end server does not received an acknowledgement of its request from the primary backend server within a threshold period of time (e.g., 500 milliseconds, one second, etc.), the frontend server extracts the BESID from the secondary certificate and forwards the signature request to that backend server. If there are more than two certificates that accompany the signature request, this process repeats until the frontend server receives an acknowledgement of its request. If no acknowledgement is received, the frontend server generates an error message and transmits it to the application server the sent the signature request.

The backend server, in conjunction with security devices and/or security tokens generates a signature with the message. The backend sever then uses the finalizing key to generate a finalized signature. The backend server sends the finalized key to the frontend server that sent the signature request. The frontend server then forwards the finalized signature to the application server that requested the signature. The application then appends the finalized signature to a digital document. Later, when required, the digital signature can be verified using the certificate .

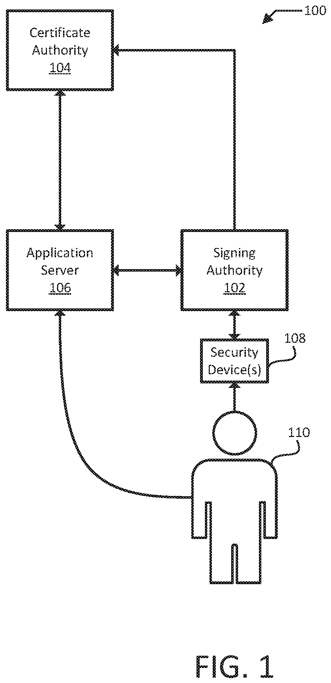

FIG. 1 illustrates a system 100 to implement a digital signature system using reliable servers in accordance with the teachings of this disclosure. The system 100 generates a digital signature that is secure and reliable. In the illustrated example, the system 100 includes a signing authority 102, a certificate authority 104, and one or more application servers 106.

The signing authority 102 acts as an intermediary between the application servers 106 and one or more security devices 108 processed by a 110 user of the application server 106. When a security device 108 is registered with the signing authority 102, the signing authority 102 collects and/or generates information for the certificate authority 104 to generate multiple certificates associated with the security device(s) 108. The signing authority 102, in conjunction with the security device(s) 108, generates digital signatures in response to a signature request that includes the certificates that are sent by one of the application servers 106.

The certificate authority 104 stores generates and stores certificates. The certificate authority 104 generates certificates based on input from the signing authority 102. The input includes a public key and a client identifier (CID). The certificate authority 104 stores the generated certificates in a database (sometimes referred to as a "certificate repository" or a "public key repository"). The certificate authority 104 provides the stored certificates to the application servers 106 in response to receiving a CID associated with the certificates (e.g., the certificates are freely available to an entity that requests them using a CID).

A customer 110 may interact with the application server 106 in a manner such that the application server 106 generates a signature request. For example, the customer 110 may be signing a document or accepting a privacy and data use policy on a website. When the application servers 106 requires a digital signature, the application servers 106 obtains the certificates from the certificate authority 104 associated with a CID supplied, directly or indirectly, but the customer 110. The signing authority 500 manages the signature process so that the application server 106 does not require a direct relationship with the security device(s) 108 of the customer 110. The application servers 106 are communicative coupled to the signing authority 102 via pre-established relationship. For example, when the owner of an application server 106 desires to accept digital signatures from the signing authority 102, the signing authority 102 may provide settings on how to transmit the signature requests.

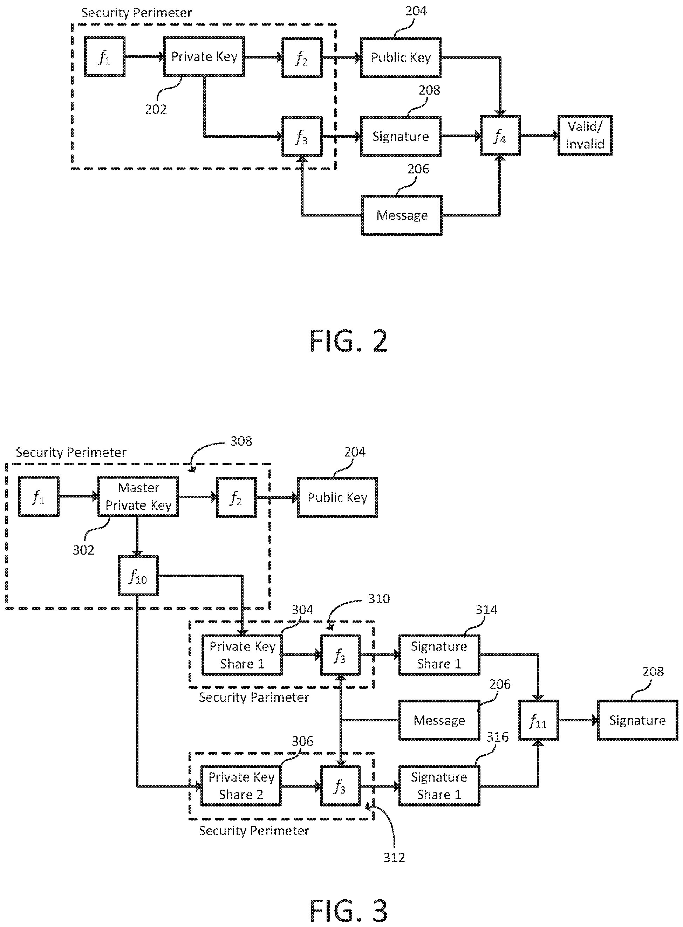

FIG. 2 illustrates a system that employs traditional asymmetric cryptography using a single private key, and generally, the system to verify a signature. A common asymmetric cryptography system (sometimes referred to as a "public key cryptosystem") used for digital signatures is Rivest-Shamir-Adleman (RSA). As illustrated in FIG. 2, the RSA cryptosystem uses four functions. The first function is a Private Key Generation function ($f_1$), which generates a private key 202 based on two distinct prime numbers $p$ and $q$. The integers $p$ and $q$ are randomly chosen and are kept secret. The second function is a Public Key Generation function ($f_2$) which generates a public key 204 based on the two prime numbers $p$ and $q$. The public key 204 consists of a public modulus ($n$) and a public exponent ($e$). The public modulus ($n$) is calculated in accordance with Equation 1 below. The public exponent ($e$) is selected such that Equation 2 below is true.

$$n = pq$$

Equation 1

$$\gcd(p - 1, e) = \gcd(q - 1, e) = 1$$

Equation 2

In equation 2 above, *gcd* is the greatest common divisor function that returns the largest positive integer that divides each of the inputs. The RSA cryptosystem uses a signing function ($f_3$) to sign a message ($m$) 206 with the private key 202, where $m \in \mathbb{Z}_n = \{0, \dots, n - 1\}$. The RSA cryptosystem uses a private key ($d$) to calculate the signature 208 of the message ($m$) 206. The private exponent ($d$) is calculated in accordance with Equation 3 below.

$$d = \frac{1}{e}\mod(p - 1)(q - 1)$$

Equation 3

The signature 208 of the message ($m$) 206 is $\sigma(m)$, which is calculated in accordance with Equation 4 below.

$$\sigma(m) = m^d \mod n$$

Equation 4

To verified a received signature ($\sigma$) 108 and an accompanying message ($m$) 206, the RSA cryptosystem uses a fourth function ($f_4$) based on the public modulus ($n$) and the public exponent ($e$). The signature ($\sigma$) 208 is verified when Equation 5 below is true.

$$\sigma^e \mod n = m$$

Equation 5

Secure implementation of a signature scheme based on RSA requires that a signer (e.g., a person or group of persons) has sole control of the functions: the Private Key Generation function ($f_1$), the Public Key Generation function ($f_2$), and the signing function ($f_3$) within a security perimeter. Typically, a device implementing the RSA signature scheme: (a) executes the Private Key Generation function ($f_1$) and the Public Key Generation function ($f_2$) only once in a lifetime of the device; and (b) assures that only the authorized signer can execute the signing function ($f_3$). The private key (e.g., the private key 202) must never leave the device. The device must always be capable of reliably authenticating the signer before executing signing function ($f_3$). Thus, the security device requires, within the security perimeter, (a) computational power to computer the functions, (b) memory to store the keys, (c) input/output (I/O) devices, and (d) an authentication solution. The security perimeter may consist of separate electronics that each implement a partial functionality. For example, the key generating functions, the Private Key Generation function ($f_1$) and the Public Key Generation function ($f_2$), may be implemented by one set of electronics, and the signing function ($f_3$) may be implemented as a separate set of electronics.

The cryptographic attack tolerance of a signature scheme (such as the RSA cryptosystem described above) is defined in terms of computational complexity theory and has mathematical and physical components. The measure of mathematical attack tolerance takes into account the computational resources (number of steps, memory in bits, program size, etc.) that is necessary to break the scheme (i.e., sign a message without having access to the private key). The computational cost of breaking the scheme is expressed as a security level. The security level is usually expressed in "bits." "N-bit security" means that the malicious actor would have to perform $2^N$ operations to break the scheme. For example, a signing scheme may have 128-bit or 256-bit security. The monetary cost of breaking the scheme is considered proportional with the computational cost. Physical attack tolerance of a security device refers to the cost of forging a signature without breaking the signature scheme mathematically (e.g., tampering with the security device).

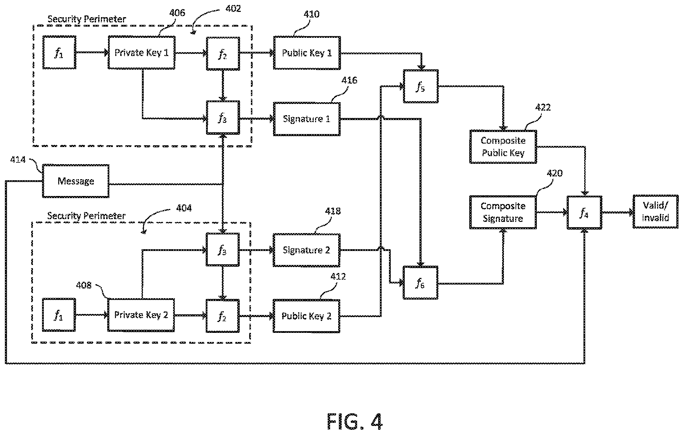

The mathematical and physical attack tolerance required for a signing scheme are derived from risk analysis and takes into account the application in which the signature solution is being used. Often, the physical design of security devices are a weakness in an RSA-based signing scheme. One approach to increasing physical attack tolerance is to require cooperation between multiple devices. In such an approach, a signature key (e.g., a master private key) is shared between several security devices. As such, a signature can only be created when the security devices cooperate. Attacking one device (e.g., physically tampering with one device, uncovering the portion of the master private key on one device, etc.) is insufficient to forge signatures. Cryptography schemes in to address these issues are discussed in connection with FIGS. 3 and 4 below.

In FIG. 3, a master private key 302 is split into two private key shares 304 and 306 (sometimes referred to as a Split-Key signing scheme). The master private key 302 is generated by a trusted dealer 308 who splits the master private key 302 with a key split function ($f_{10}$) to create a first private key share ($d'$) 304 and a second private key share ($d''$) 306. The trusted dealer 308 may split the master private key 302 for additive sharing or for multiplicative sharing. FIG. 2 illustrates the trusted dealer 308 splitting the master private key 302 for additive sharing. When splitting for additive sharing, the trusted dealer 308 uses the key split function ($f_{10}$) to derive the first private key share ($d'$) 304 and the second private key share ($d''$) 306 based on the private exponent ($d$) of the master private key 302 in accordance to Equation 6 below.

$$d \equiv d' + d''\left(\mathrm{mod}\,\varphi(n)\right)$$

$$\text{Equation 6}$$

When splitting for multiplicative sharing, the trusted dealer 308 uses the key split function ($f_{10}$) to derive the first private key share ($d'$) 304 and the second private key share ($d''$) 306 in accordance to Equation 7 below.

$$d \equiv d'd''\left(\mathrm{mod}\,\varphi(n)\right)$$

$$\text{Equation 7}$$

The trusted dealer 308 transmits the first private key share ($d'$) 304 to a first security device 310 and the second private key share ($d''$) to a second security device 312. When generating a signature, the security devices 310 and 312 perform the signing function ($f_3$) with their respective private key shares to generate a first signature share ($\sigma'$) 314 and a second signature share ($\sigma''$) 316. The signature ($\sigma$) 308 is generated with the first signature share ($\sigma'$) 314 and the second signature share ($\sigma''$) 316 with a splitkey combiner function ($f_{11}$). For additive sharing, the splitkey combiner function ($f_{11}$) is calculated in accordance with Equation 8 below.

$$\sigma = \sigma' \cdot \sigma''\mathrm{mod}\,n = m^{d'+d''}\mathrm{mod}\,n$$

$$\text{Equation 8}$$

For multiplicative sharing, the splitkey combiner function ($f_{11}$) is calculated in accordance with Equation 9 below.

$$\sigma = \sigma''\left(\sigma'(m)\right) = m^{d'd''}\mathrm{mod}\,n$$

$$\text{Equation 9}$$

The generated signature 208 is used as described above with the traditional RSA signing scheme.

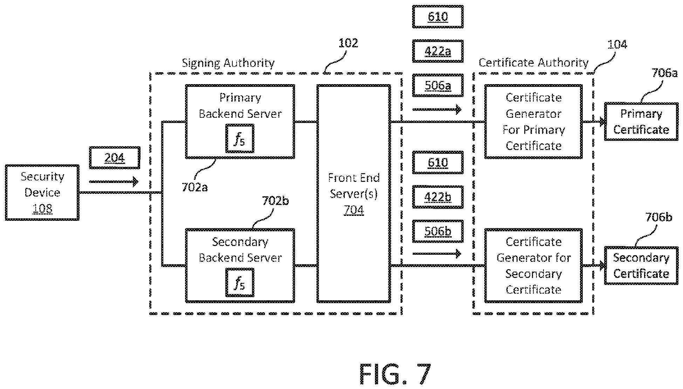

In some examples, one of the private key shares is held by security device and the other private key share is held by a backend server (e.g., the backend server 702 of FIG. 7 below) The Split-Key signing scheme often requires the trusted dealer 308 to split a master private key 302 into the private key shares 304 and 306 and then securely transmitting the signature shares 314 and 316 to the security devices. In some examples, the trusted dealer 308 uses a distributed generation of shares is used, where the first signature share ($\sigma'$) 314 and the second signature share ($\sigma''$) 316 and the common public key 204 are generated as the outcome of a multi-party cryptographic protocol (e.g., the multi-party cryptographic protocol $\Pi$) in which the master private key 302 never exists as a whole.

FIG. 4 illustrates a system that employs composite-key key asymmetric cryptography that uses multiple private keys that are independent of each other. FIG. 4 illustrates a Comp Key signing scheme using a first security device 402 and a second security device 404. In some examples, one of the first or second security devices 402 and 404 is a backend server (e.g., the backend server 702 of FIG. 7 below). The security devices 402 and 404 each independently generate a private key 406 and 408 using the Private Key Generation function ($f_1$) (as

described above). Additionally, the security devices 402 and 404 each generate a public key 410 and 412 with a public modulus ($n$) (e.g., calculated in accordance with Equation 1 above) and a public exponent ($e$) (e.g., determined in accordance with Equation 2 above). The public keys 410 and 412 are transmitted to the backend server. When the security devices 402 and 404 receive a message 414 to use to generate a signature, after the security devices each independently authenticate the signer, the security devices 402 and 404 use the signing function ($f_3$) (as described above) to each independently generate a signature 416 and 418.

To sign a digital document, a composite signature 420 is generated from the first signature ($\sigma_1$) 416 and the second signature ($\sigma_2$) 418. In the illustrated example, the composite signature ($\sigma_C$) 420 is generated with a composite signature function ($f_6$) in accordance with Equation 10 below.

$$\sigma_C = (bn_1\sigma_1 + an_2\sigma_2) \bmod (n_1 n_2)$$

Equation 10

In Equation 10 above, $n_1$ is the public modulus of the first public key 410 and $n_2$ is the public modulus of the second public key 412. Additionally, the coefficients $a$ and $b$ satisfy $an_1 + bn_2 = 1$. The composite signature ($\sigma_C$) 420 is further modified by the backend server and then used to append a digital document.

To verify a signed document, the composite public modulus ($n_C$) of the composite public key 422 is calculated using a composite public key function ($f_5$) in accordance with Equation 11 below. The composite public modulus ($n_C$) of the composite public key 422 is based on the public modulus ($n_1$) of the first public key 410 and the second public modulus ($n_2$) of the second public key 412.

$$n_c = n_1 n_2$$

Equation 11

Using the composite public key 422 ($<n_C, e>$) and the message 414, the signature ($\sigma_S$) associated with the signed digital document is verified with function $f_4$ (as described above).

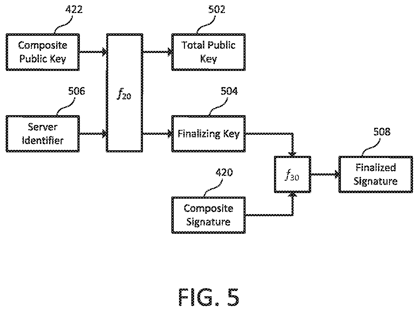

FIG. 5 illustrates a system that generates a total public key 502 and a finalizing key 504 using a unique backend server identifier (BESID) 506. The system embeds the BESID 506 into the total public key 502 and the finalizing key 504. The description below uses the Comp Key scheme, but the Split Key scheme may also be used.

The system generates the total public key 502 and a finalized signature 508 using an identity embedding function ($f_{20}$). The identity embedding function ($f_{20}$) uses the composite public key 422 (or any other applicable public key) and the BESID 506 to generate the total public key 502 and the finalized signature 508. In the illustrated example, the identity embedding function ($f_{20}$) is calculated in accordance with Equations 12 through 17 below. First, the system computes an L bound according with Equation 12 below.

$$L = \left\lceil \frac{c \cdot 2^{k+l'}}{n'} \right\rceil$$

Equation 12

The system computes an R bound in accordance with Equation 13 below.

$$R = \left\lfloor \frac{(c+1) \cdot 2^{k+l'}}{n'} \right\rfloor$$

Equation 13

In Equations 12 and 13 above, $c$ is the m-bit length BESID, k is a reliability parameter, and $n'$ is an RSA modulus (with $2^{l'-1} \le n' < 2^{l'}$ and $2^{m-1} \le n' < 2^m$) (such as, the modulus ($n_C$) of the composite public key 422, etc.). The system then finds prime number ($p$) where Equation 14 below is true.

$$L \le p \le R \text{ and } \gcd(p - 1, e) = 1$$

Equation 14

In Equation 14 above, $e$ is the public exponent and $gcd$ is the greatest common divisor function that returns the largest positive integer that divides each of the inputs.

The system computes a modulus ($n_{TP}$) of the total public key 502 in accordance with Equation 15 below.

$$n_{TP} = n' \cdot p$$

Equation 15

As a result, the identity embedding function ($f_{20}$) outputs the total public key 502 as $<n_{TP}, e>$.

The system computes a finalizing exponent ($d_f$) in accordance with Equation 16 below.

$$d_f = \frac{1}{e} \bmod (p - 1)$$

Equation 16

The system then finds the Bezout coefficients $a'$ and $b'$ such that Equation 17 below is satisfied.

$$a' \cdot p + b' \cdot n' = 1$$

Equation 17

As a result, the identity embedding function ($f_{20}$) outputs the finalizing key 504 as (n, a', b', p, $d_f$).

After the backend server generates the composite signature 420, the system generates a finalized signature ($\sigma_F$) 508 to send to the frontend server to be forwarded to the requesting application server. The finalized signature ($\sigma_F$) 508 has the BESID 506 of the backend server embedded in it using a finalizing function ($f_{30}$). The finalizing function ($f_{30}$) uses an RSA signature ($\sigma'$) (such as, the composite signature ($\sigma_C$) 420, etc.), a padded message $P$, and the finalizing key 504 (e.g., (n, a', b', p, $d_f$), etc.) to generate the finalized signature ($\sigma_F$). **In** the illustrated example, the finalizing function ($f_{30}$) is calculated in accordance with Equations 18 through 20 below. Initially, the system reduces the padded message P in accordance with Equation 18 below.

$$P_f = P \bmod p$$

Equation 18

In Equation 18 above, $P_f$ is the reduced message. The system then computes a partial final signature ($\sigma_f$) in accordance with Equation 19 below.

$$\sigma_f = P_f^{\,d_f} \bmod p$$

Equation 19

The system them computes the finalized signature ($\sigma_F$) 508 in accordance with Equation 20 below.

$$\sigma_F = \left( \frac{n_{\mathrm{TP}} \cdot b' \cdot \sigma_f}{p} + p \cdot a' \cdot \sigma' \right) \bmod n_{\mathrm{TP}}$$

Equation 20

The system then forwards the finalized signature ($\sigma_F$) to the frontend server.

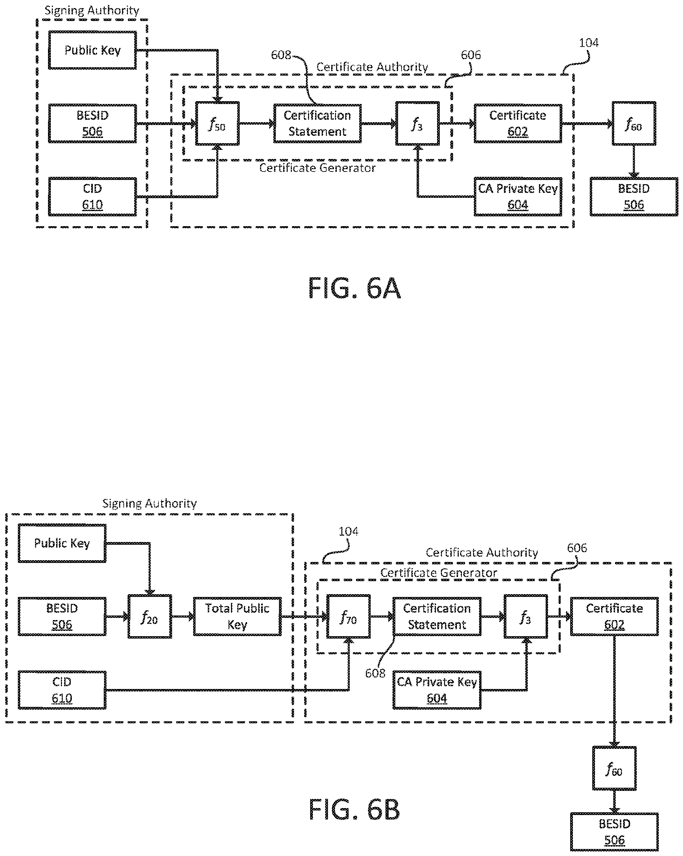

FIGS. 6A and 6B are block diagrams of the certificate authority 104, in cooperation with the signing authority 102, generating certificates 602 to be associated with a user. FIG. 6A illustrates an example when the certificate authority 104 has access to internal information of the signing authority 102 (such as, the BESIDs 506, etc.). For example, the certificate authority 104 may be closely related to the signing authority 102 (e.g., operated by the same entity, etc.) or incorporated into the signing authority 102. FIG. 6B illustrates an example when the certificate authority 104 does not have access to internal information of the signing authority 102. For example, the certificate authority 104 may be operated by a separate entity as the signing authority 102. In the illustrated examples of FIGS. 6A and 6B, the certificate authority 104 includes a certificate authority (CA) private key 604 and a certificate generator 606. The CA private key 604 may be generated by the certificate authority 104 by any suitable means (e.g., the Private Key Generation function ($f_1$) as described above). The certificate generator 606 received input from the signing authority 102 and generates the certificate 602.

In FIG. 6A, the certificate generator 606 includes a combination function ($f_{50}$) that generates a certification statement 608 using a public key (e.g., the composite public key 422 of FIG. 4 above), the BESID 506, and a client identifier (CID) 610. The public key, the BESID 506, and the CID 610 are received from the signing authority 102. The combination function ($f_{50}$) generates the certification statement 608 that is a list or concatenation of the public key, the BESID 506, and the CID 610.

In FIG. 6B, the certificate generator 606 includes a combination function ($f_{70}$) that generates a certification statement 608 using a total public key (e.g., the total public key 502 of FIG. 5 above) and the CID 610. The total public key and the CID 610 are received from the signing authority 102. The combination function ($f_{70}$) generates the certification statement 608 that is a list or concatenation of total public key and the CID 610.

The certificate generator 606 generates the certificate 602 by applying signing function ($f_3$) to the certification statement 608 using the CA private key 604. The certificate generator 606 then stores the certificate 602 associated with the CID 610 in a database.

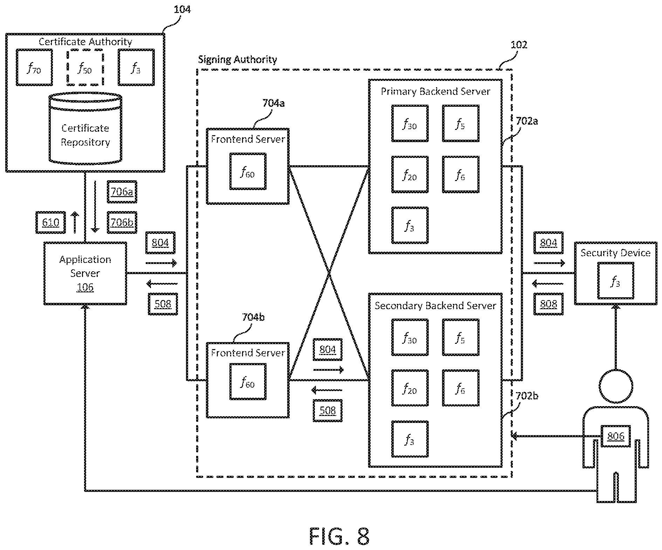

When the certificate 602 is included in a signature request (e.g., the signature request 804 of FIG. 8 below), the signing authority 102 uses an identity extraction function ($f_{60}$) to extract the BESID 506 from the certificate 602. The identify extraction function ($f_{60}$) extracts the BESID 506 from the certificate 602 by decrypting the certificate using the public key of the certificate authority 104 that corresponds to the CA private key 604 and extracts the BESID 506 from the certification statement 608.

FIG. 7 is a block diagram of a system to generate multiple certificates 602 associated with a customer 110. When the security device 108 is first activated, it generates a private key (e.g., the private key 202 of FIG. 2 above) and a public key 204. The security device 108 transmits the public key 204 to the signing authority 102, which routes the public key 204 to at least two backend servers 702. These backend servers 702 become the servers with the information (e.g., IP address, credentials, etc.) necessary to communicate with the security device 108. The backend servers 702 also receive or otherwise retrieve the CID 610 associated with the security device 108 (e.g., obtained via an activation process, etc.).

In the illustrated example, the backend servers 702a and 702b independently generate a public key and combine the generate public key with the public key received from the security device 108 using the composite public key function ($f_5$). Alternatively, the customer 110 registers two or more security devices 108 and the backend servers 702 combine the received public keys using the composite public key function ($f_5$). In the illustrated example, the primary backend server 702a generates a primary composite public key 422a. The primary backend server 702a forwards the composite public key 422a, its BESID 506a, and the CID 610 to a frontend server 704. The frontend server 704 transmits the composite public key 422a, the CID 610, and the BESID 506a to the certificate authority 104. The certificate authority 104, using the certificate generator 606, generates a primary certificate 706a using the composite public key 422a, the CID 610, and the BESID 506a.

The secondary backend server 702b generates a secondary composite public key 422b. Because the public key generated by the secondary backend server 702b is different than the public key generated by the primary backend server 702a, the secondary composite public key 422b is different than the primary composite key 422. The secondary backend server 702b forwards the composite public key 422b, its BESID 506b, and the CID 610 to the frontend server 704. The frontend server 704 transmits the composite public key 422, the CID 610, and the BESID 506b to the certificate authority 104. The certificate authority 104, using the certificate generator 606, generates a secondary certificate 706b using the composite public key 422b, the CID 610, and the BESID 506b.

FIG. 8 is a block diagram of a system that uses redundant certificates (e.g., the primary certificate 706a and the secondary certificate 706b) associated with a customer 110 to generate a digital signature (e.g., the finalized signature 508) to sign a document. In the illustrated example, the customer 110 interacts with the application server 106 such that the application server 106 needs to generate a signed document. The application server 106 receives and/or otherwise retrieves the CID 610 (e.g., via the customer 110). Using the CID 610, the application server requests the certificates associated with the CID 610 (e.g., the primary certificate 706a and the secondary certificate 706b, etc.). The application server 106 generates a signature request 804 that includes (i) the certificates 706a and 706b and (ii) a message 414. The message may be an original message (e.g., the digital document to be signed) or a message digest computed from the original message by applying a cryptographic hash function (e.g., SHA-256, etc.) to the original message.

The application server 106 has an established relationship with at least two frontend servers (e.g., a primary frontend server 704a and a secondary frontend server 704b) of the signing authority 102 (e.g., established when the application server 106 enrolls with the signing authority 102, etc.). The relationship with multiple frontend servers provide redundancy for when one of the frontend servers is unavailable. The signing authority 102 may select which particular frontend servers are assigned to the application server 106 based on traffic management principles. For example, application servers 106 assigned to the same primary frontend server 704a may be assigned to different secondary frontend servers 704b so that the unavailability of a primary frontend server 704a does not stress any one secondary frontend server 704b. The frontend server that acts as a primary frontend server 704a of one application server 106 may be the secondary frontend server 704b of another application server 106.

The application server 106 sends the signature request 804 to the primary frontend server 704a. If the application server 106 does not get an acknowledgement of the signature request 804 and/or receives any other indication that the primary frontend server 704a is unavailable, the application server 106 sends the signature request 804 to the secondary frontend server 704b. In examples where the application server 106 is associated with more than two frontend servers, this may continue until the application server 106 has tried all of the frontend servers it is associated with. If no frontend servers are available, the application server 106 generates an error.

The frontend server (e.g., the primary frontend server 704a or the secondary frontend server 704b) that receives the signature request 804 extracts the BESID 506a of the primary backend server 702a from the primary certificate 706a using the identity extraction function ($f_{60}$). The frontend sever then forwards the signature request 804 to the primary backend server 702a. If the frontend server does not get an acknowledgement of the signature request 804 and/or receives any other indication that the primary backend server 702a is unavailable, the frontend server (i) extracts the BESID 506b of the secondary backend server 702b from the secondary certificate 706b using the identity extraction function ($f_{60}$) and (ii) sends the signature request 804 to the secondary backend server 702b. In examples where the signature request 804 includes more than two certificates, this may continue until the frontend server has tried to forward the signature request 804 using all of the certificates. If no backend servers are available, the frontend server sends an error message to the application server 106.

The backend server (e.g., the secondary backend server 702b) identifies the customer 110. In the illustrated example, backend server includes a private key associated with the customer 110 (e.g., an independent private key for the Comp Key scheme or a key share for the Split Key scheme, etc.). The backend server attempts to authenticate the identity of the customer 110 (e.g., via a security token 806). When the backend server successfully authenticates the identity of the customer 110, it uses the signing function ($f_3$) to generate a first signature (or first signature share) using the message 414 and the private key associated with the customer 110. The backend server also sends the signature request (or a part thereof) to the security device 108 associated with the customer 110. After the security device 108 authenticates the identity of the customer 110, the security device 108 generates a second signature (or a second signature share) 808 and sends it the backend server that sent it the signature request 804. In a Comp Key embodiments, the backend server generates a composite signature 420 using the composite signature function ($f_6$). In Split Key embodiments, the backend server generates signature using the splitkey combiner function ($f_{11}$). Using the finalizing key 504, the backend server generates the finalized signature 508 using the finalizing function ($f_{30}$).

The backend server sends the finalized signature 508 to the frontend server that sent the signature request 804. The frontend server sends the finalized signature 508 to the application server 106 that sent the signature request 804. The application server 106 appends the finalized signature 508 to the digital document to be signed.

The frontend servers and the backend servers may operate on the same physical machine or set of physical machines using virtual computing resources, such as virtual machines or containers, etc. In some examples, the frontend servers and the backend servers are isolated from each other so that if one is breached, none of the others are affected. For example, if one frontend server is breached, the other frontend servers and the backend servers are not affected.

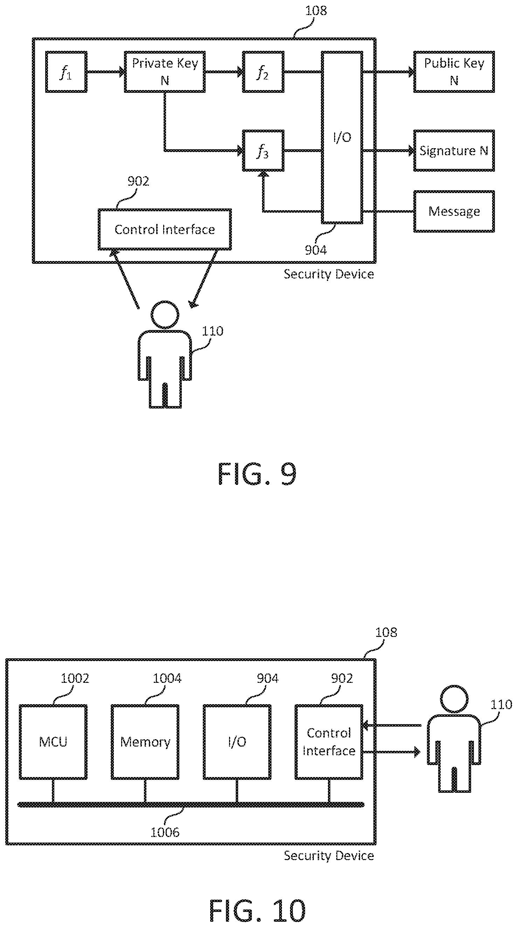

FIG. 9 illustrates a security device 108 implementing a device-side portion of the signing scheme of FIGS. 2, 3, 5, 7, and 8. The security device 108 implements the functions: the Private Key Generation function ($f_1$), the Public Key Generation function ($f_2$), and signing function ($f_3$). The security device 108 includes a control interface 902 and a input/output (I/O) interface 904. The control interface 902 receives input from a signer (e.g., the customer 110, etc.) to authenticate the identity of the signer before the security device 108 generates a signature (e.g., the signatures 416 and 418). The I/O interface 904 communicates directly or indirectly with the signing authority 102 to transmit the signature and the public key, and receive the message used to generate the signature.

FIG. 10 is a block diagram of electronic components 1000 of the security device 108 of FIG. 9. In the illustrated example, the electronic components 1000 include the control interface 902, the I/O interface 904, a processor or controller 1002, and memory 1004, and a data bus 1006 that connects the other electronic components.

The control interface 902 provides a physical interface between the security device 108 and the signer. The control interface 902 may include a digital camera (e.g., for image capture, visual command recognition, facial recognition, iris recognition, etc.), a touch screen and/or keyboard (e.g., for input of credentials), an audio input device (e.g., a microphone for voice recognition, etc.), a biometric input device (e.g., a fingerprint scanner, etc.) and/or a biometric sensor (e.g., a pulse oximeter, a pulse sensor, etc.). For example, the control interface 902 may include the touch screen and fingerprint identity sensor of a smart phone. The input from the signer to the control interface 902 is used to authenticate the identity of the signer. In some examples, more than one method of identifying and authenticating the signer is included. For example, the signer may need to provide both a fingerprint and a password. In some examples, the control interface 902 may be different between two cooperating security devices 108. For example, one security device 108 may have a camera to perform facial recognition and the other security device 108 may have a fingerprint scanner.

The I/O interface 904 provides an interface to communicate with other devices to transmit the public key and the signature and receive the message. The I/O interface 904 includes communication controllers and antenna for one or more for standards-based networks (e.g., Global System for Mobile Communications (GSM), Universal Mobile Telecommunications System (UMTS), Long Term Evolution (LTE), Code Division Multiple Access (CDMA), WiMAX (IEEE 802.16m); Near Field Communication (NFC); local area wireless network (including IEEE 802.11 a/b/g/n/ac or others), Bluetooth® and Bluetooth® Low Energy, and Wireless Gigabit (IEEE 802.11ad), etc.). The I/O interface 904 directly or indirectly (e.g., via anther security device 108) communicates with an external network. The external network may be a public network, such as the Internet; a private network, such as an intranet; or combinations thereof, and may utilize a variety of networking protocols now available or later developed including, but not limited to, TCP/IP-based networking protocols.

The processor or controller 1002 may be any suitable processing device or set of processing devices such as, but not limited to: a microprocessor, a microcontroller-based platform, a suitable integrated circuit, one or more field programmable gate arrays (FPGAs), and/or one or more application-specific integrated circuits (ASICs). The memory 1004 may be volatile memory, non-volatile memory, unalterable memory, read-only memory, and/or high-capacity storage devices (e.g., hard drives, solid state drives, etc). In some examples, the memory 1004 includes multiple kinds of memory, particularly volatile memory and non-volatile memory. Additionally, the memory 1004 may include secure memory (sometimes referred to as "cryptomemory") which includes an embedded hardware encryption engine with its own authentication keys to securely store information.

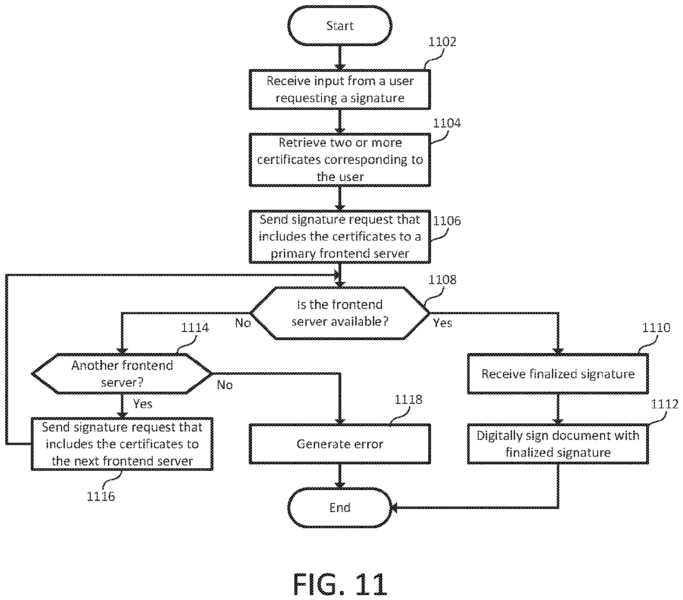

FIG. 11 is a flowchart of a method to use redundant certificates 602 associated with a customer 110 to generate a document signed by a digital signature, which may be implemented by the application server 106 of FIGS. 1 and 8. Initially, at block 1102, the application server 106 receives an input from a customer 110 that results in a digital document to sign. For example, the customer 110 may click on an acceptance button to indicate acceptance of a privacy policy of a website associated with the application server 106. At block 1104, the application server 106 retrieves two or more certificates 602 associated with the customer 110 from the certificate authority 104. At block 1106, the application server 106 sends a signature request 804 to the primary frontend server 704a. The application server 106 is configured to communicatively couple to at least two frontend servers. In some example, the order of the frontend server (e.g., which frontend server is the primary frontend server 704a and which frontend server is the secondary frontend server 704b, etc.) is designated by the signing authority 102 when then application server 106 registers with the signing authority 102. Alternatively, in some example, the application server 106 selects one of the frontend servers to send the signature request 804 to first.

At block 1108, the application server 106 determines whether it has received an indication that the frontend server is unavailable. For example, the application server 106 may (b) wait a threshold period of time to receive the signature from the frontend server, (b) receive a message that the frontend server is not available, and/or (c) fail to receive an acknowledgement from the frontend server in response to the signature request 804. If the frontend server is available, the method continues at block 1110. Otherwise, if the frontend server is not available, the method continues at block 1114.

At block 1110, the application server 106 receives a finalized signature 508 from the frontend server. At block 1112, the application server 106 appends finalized signature to the digital document.

At block 1114, the application server 106 determines whether there is another frontend server to send the signature request. If there is another frontend server, the method continues to block 1116. Otherwise, if there is not another frontend server, the method continues to block 1118.

At block 1116, the application server 106 sends the signature request 804 to the next frontend server (e.g., the secondary frontend server 704b, etc.). The method then returns to block 1108.

At block 1118, the application server 106 generates an error message.

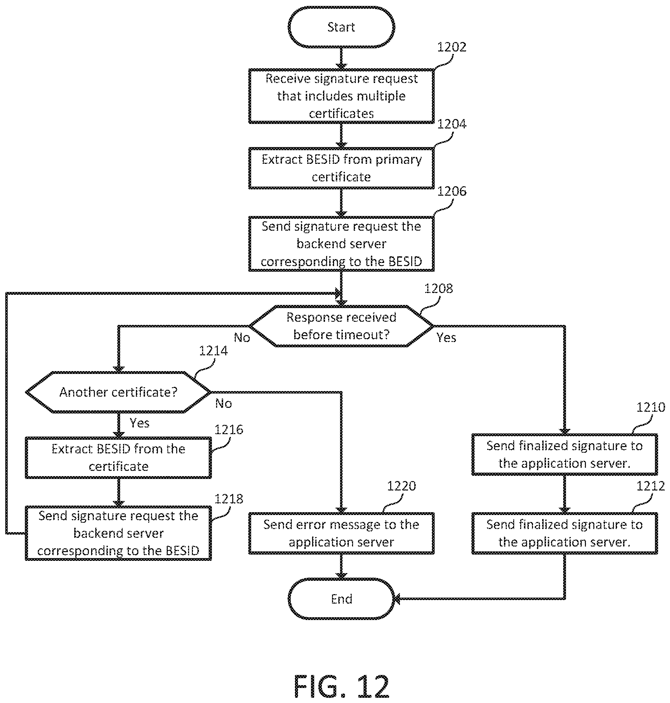

FIG. 12 is a flowchart of method to use redundant certificates associated with a customer 110 to generate a document signed by a digital signature, which may be implemented by the frontend server(s) 704 of FIGS. 1 and 8. Initially, at block 1202, the frontend server 704 receives a signature request 804 from an application server 106 that includes multiple certificates (e.g., a primary certificate 706a and a secondary certificate 706b, etc.). At block 1204, the frontend server 704 extracts the BESID 506 from the primary certificate 706a using the identity extraction function ($f_{60}$). At block 1206, the frontend server 704 sends the signature request 804 to the backend server 702 that corresponds to the BESID 506 extracted at block 1204.

At block 1208, the frontend server 704 determines whether it has received an indication that the backend server 702 is unavailable. For example, the frontend server 704 may (b) wait a threshold period of time to receive the signature from the backend server 702, (b) receive a message that the backend server 702 is not available, and/or (c) fail to receive an acknowledgement from the backend server 702 in response to the signature request 804. If the backend server 702 is available, the method continues at block 1210. Otherwise, if the backend server 702 is not available, the method continues at block 1214.

At block 1210, the frontend server 704 receives the finalized signature 508 from the backend server 702. At block 1212, the frontend server 704 sends the finalized signature 508 to the application server 106.

At block 1214, the frontend server 704 determines whether there is another certificate (e.g., a secondary certificate 706b). If there is another certificate, the method continues to block 1216. Otherwise, if there is not another certificate, the method continues to block 1220. At block 1216, the frontend server 704 extracts the BESID 506 from the secondary certificate 706b using the identity extraction function ($f_{60}$). At block 1218, the frontend server 704 sends the signature request 804 to the backend server 702 that corresponds to the BESID 506 extracted at block 1216. The method then returns to block 1208.

At block 1220, the frontend server 704 sends an error message to the application server 106.

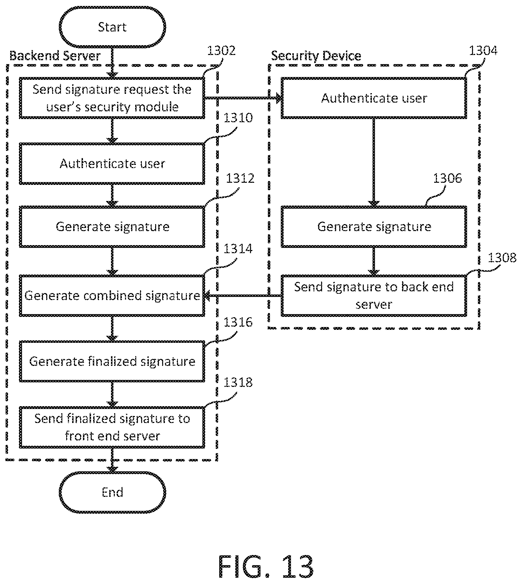

FIG. 13 is a flowchart of a method to generate a signature for a digital document which may be implemented by the system of FIGS. 1 and 8. In FIG. 13, the backend server 702 stores a private key for a customer 110. At block 1302, the backend server 702 sends the signature request 804 to the security device 108 associated with the corresponding certificate 602 included in the signature request 804. At block 1304, the security device 108 authenticates the customer 110. For example, the security device 108 may authenticate the customer 110 in response to receiving a finger print and/or a set of credentials. At block 1306, the security device 108 generates a first signature with its stored private key using the signing function ($f_3$). At block 1308, the security device 108 transmits the first signature to the backend server 702.

At block 1310, the backend server 702 authenticates the customer 110. In some examples, the backend server 7022 may communicate with a security token to receive credentials or other authentication tokens. For example, the security token may have a finger print scanner to receive an input from the customer 110 and a wireless transceiver to determine whether the security token is within a threshold distance of the security device 108 (e.g., using RSSI measurements, etc.). At block 1312, the backend server 702 generates a second signature using the signing function ($f_3$). At block 1314, the backend server 702 generates a combined signature (e.g., a composite signature using the composite signature function ($f_6$), or a splitkey signature using the splitkey combiner function ($f_{11}$), etc.). At block 1216, the backend server 702 generates a finalized signature using the finalizing function ($f_{30}$) based on the combined signature and the finalizing key 504 associated with the customer 110. At block 1318, the backend server 702 sends the finalized signature to the frontend server 704.

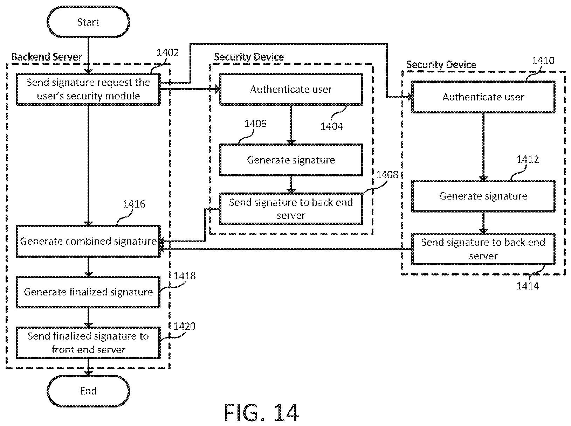

FIG. 14 is a flowchart of a method to generate a signature for a digital document which may be implemented by the system of FIGS. 1 and 8. In FIG. 14, the backend server 702 does not store a private key for a customer 110. At block 1402, the backend server 702 sends the signature request 804 to the security devices 108 associated with the corresponding certificates 602 included in the signature request 804.

At block 1404, the first security device 108 authenticates the customer 110. For example, the first security device 108 may authenticate the customer 110 in response to receiving a finger print and/or a set of credentials. At block 1406, the first security device 108 generates a first signature with its stored private key using the signing function ($f_3$). At block 1408, the first security device 108 transmits the first signature to the backend server 702.

At block 1410, the second security device 108 authenticates the customer 110. At block 1412, the second security device 108 generates a second signature with its stored private key using the signing function ($f_3$). At block 1414, the second security device 108 transmits the second signature to the backend server 702.

At block 1416, the backend server 7022 generates a combined signature (e.g., a composite signature using the composite signature function ($f_6$), or a splitkey signature using the splitkey combiner function ($f_{11}$), etc.). At block 1418, the backend server 702 generates a finalized signature using the finalizing function ($f_{30}$) based on the combined signature and the finalizing key 404 associated with the customer 110. At block 1420, the backend server 702 sends the finalized signature 508 to the frontend server 704.

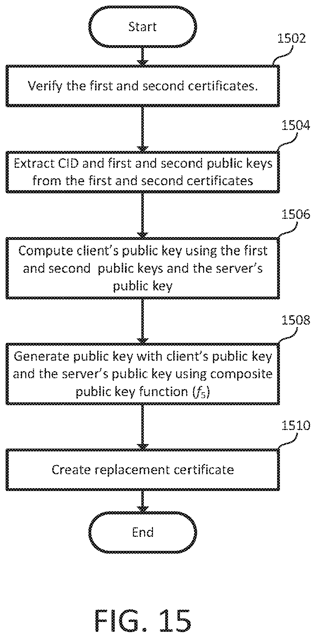

FIG. 15 is a flowchart of a method to reissue certificates 602. The certificates may be reissued, for example, when one of the backend servers 702 becomes non-functional. A new backend server can be installed and new certificates can be issued based on the existing certificates. As described below, this process is automatic and does not, in some examples, require sending a specific request to the certificate authority 104. If two different backend servers 702 are use, and one of them is non-functional, then this automatic certificate issuing procedure enables recovery of the system without any downtime. Initially, the certificate authority 104 receives the BESID 506 and the public key of the new backend server 702.

At block 1502, the certificate authority 104 verifies the primary and secondary certificates 706a and 706b associated with the primary and secondary backend servers 702a and 702b. At block 1504, the certificate authority 104 extracts the CID 610, the public key of the primary certificate 706a, and the public key of the secondary certificate 706b. At block 1506, the certificate authority 104 computes the public key to the customer's security device 108 using the public key of the primary certificate 706a and the public key of the secondary certificate 706b. At block 1508, the certificate authority 104 creates the new public key using the public key to the customer's security device 108 and the public key of the new backend server 702 (e.g., using the composite public key function ($f_5$), etc.). At block 1510, the certificate authority 104 creates a new certificate 602 for the new backend server 702 based on the BESID 506 of the new backend server 702, the new public key, and the CID 610 associated with the primary and secondary certificates 706a and 706b. At block 1506, the certificate authority 104 the certificate associated with the non-functioning backend server 702 with the new certificate.

In this application, the use of disjunctive is intended to include the conjunctive. The use of definite or indefinite articles is not intended to indicate cardinality. In particular, a reference to "the" object or "a" and "an" object is intended to denote also one of a possible plurality of such objects. Further, the conjunction "or" may be used to convey features that are simultaneously present instead of mutually exclusive alternatives. In other words, the conjunction "or" should be understood to include "and/or". As used here, the terms "module" and "unit" refer to hardware with circuitry to provide communication, control and/or monitoring capabilities, often in conjunction with sensors. "Modules" and "units" may also include firmware that executes on the circuitry. The term "remote" means being geographically removed from and communicatively coupled via an internal or external network, such as an intranet or the Internet). The terms "includes," "including," and "include" are inclusive and have the same scope as "comprises," "comprising," and "comprise" respectively.

The above-described embodiments, and particularly any "preferred" embodiments, are possible examples of implementations and merely set forth for a clear understanding of the principles of the invention. Many variations and modifications may be made to the above-described embodiment(s) without substantially departing from the principles of the techniques described herein. All modifications are intended to be included herein within the scope of this disclosure and protected by the following claims.

**Claims**

1. A system for generating a digital signature comprising:

a first backend server;
a second backend server;
a frontend server configured to:

> receive a signature request from a remote application server, the signature request including a first total public key with a cryptographically embedded first server identifier and a second total public key with a cryptographically embedded second server identifier;
> extract the cryptographically embedded first server identifier from the first total public key;
> forward the signature request to first backend server that corresponds to the first server identifier;
> in response to determining that the first backend server is unavailable, extract the cryptographically embedded second server identifier from the second total public key, and forward the signature request to the second backend server that corresponds to the second server identifier;
> forward a second signature to the application server; and

wherein the first and second backend servers are each configured to:

> forward the signature request to a plurality of remote security devices associated with the total public key;
> receive a first signature from each of the plurality of remote security devices;
> generate a combined signature based on the first signatures;
> generate the second signature based on the combined signature and a finalizing key, the finalizing key being cryptographically generated based on the server identifier of the backend server; and
> forward the second signature to the frontend server.

2. The system of claim 1, wherein combined signature is generated using a composite key signature scheme.

3. The system of claim 1, wherein the combined signature is generated using a combined key signature scheme.

4. The system of claim 1, wherein the frontend server determines that the first backend server is unavailable when the frontend server fails to receive an acknowledgement from the first backend server in response to forwarding the signature request.

5. The system of claim 1, wherein the frontend server determines that the first backend server is unavailable when the frontend server fails to receive the second signature within a threshold period of time.

6. A system to generate a digital signature comprising:

a first backend server;
a second backend server;
a first frontend server;
a second frontend server; and
a certificate authority;
wherein the certificate authority is configured to, in response to receiving a certificate request including a user identifier from an application server, forward a first certificate with a first public key and a second certificate with a second public key to the application server, the first and second certificates being associated with the user identifier;
wherein the first and second frontend servers are each configured to:

> receive a signature request from the application server, the signature request including the first public key with a cryptographically embedded first server identifier and the second public key with a cryptographically embedded second server identifier;
> extract the cryptographically embedded first server identifier from the first public key;
> forward the signature request to first backend server that corresponds to the first server identifier;
> in response to determining that the first backend server is unavailable, extract the cryptographically embedded second server identifier from the second public key, and forward the signature request to the second backend server that corresponds to the second server identifier;
> forward a second signature to the application server; and

wherein the first backend server and the second backend server are each configured to:

> forward the signature request to a plurality of remote security devices associated with the total public key;
> receive a first signature from each of the plurality of remote security devices;
> generate a combined signature based on the first signatures;
> generate the second signature based on the combined signature and a finalizing key, the finalizing key being cryptographically generated based on the server identifier of the backend server; and
forward the second signature to the frontend server.

7.  The system of claim 6, wherein combined signature is generated using a composite key signature scheme.

8.  The system of claim 6, wherein the combined signature is generated using a combined key signature scheme.

9.  The system of claim 6, wherein the frontend server determines that the first backend server is unavailable when the frontend server fails to receive an acknowledgement from the first backend server in response to forwarding the signature request.

10. The system of claim 6, wherein the frontend server determines that the first backend server is unavailable when the frontend server fails to receive the second signature within a threshold period of time.

11. The system of claim 6, wherein the certificate authority is further configured to, in response to determining that one of the first or second backend servers is not available, generate a third certificate associated with a third backend server based on the first certificate and the second certificate.

12. A method for generating a digital signature comprising:

    receiving, at a front end server, a signature request from a remote application server, the signature request including a first total public key with a cryptographically embedded first server identifier and a second total public key with a cryptographically embedded second server identifier;
    extracting, by the frontend server, the cryptographically embedded first server identifier from the first total public key;
    forwarding, by the frontend server, the signature request to first backend server that corresponds to the first server identifier;
    in response to determining that the first backend server is unavailable, extracting, by the frontend server, the cryptographically embedded second server identifier from the second total public key, and forwarding the signature request to the second backend server that corresponds to the second server identifier;
    forwarding, by the first or second backend server, the signature request to a plurality of remote security devices associated with the total public key;
    receiving, by the first or second backend server, a first signature from each of the plurality of remote security devices;
    generating, by the first or second backend server, a combined signature based on the first signatures;
    generating, by the first or second backend server, a second signature based on the combined signature and a finalizing key, the finalizing key being cryptographically generated based on the server identifier of the backend server;
    forwarding, by the first or second backend server, the second signature to the frontend server; and
    forwarding, by the frontend server, the second signature to the application server.

13. The method of claim 12, wherein combined signature is generated using a composite key signature scheme.

14. The method of claim 12, wherein the combined signature is generated using a combined key signature scheme.

15. The system of claim 12, wherein determining that the first backend server is unavailable including determining when the frontend server fails to receive an acknowledgement from the first backend server in response to forwarding the signature request.

16. The system of claim 12, wherein the frontend server determines that the first backend server is unavailable when the frontend server fails to receive the second signature within a threshold period of time.

**Patentansprüche**

1.  Ein System zum Erzeugen einer digitalen Signatur, umfassend:

    einen ersten Backend-Server;
    einen zweiten Backend-Server;
    einen Frontend-Server, der dazu eingerichtet ist:

    eine Signaturanforderung von einem entfernten Anwendungsserver zu empfangen, wobei die Signaturanforderung einen ersten öffentlichen Gesamtschlüssel mit einer kryptographisch eingebetteten ersten Serverkennung und einen zweiten öffentlichen Gesamtschlüssel mit einer kryptographisch eingebetteten zweiten Serverkennung enthält;
    die kryptographisch eingebettete erste Serverkennung aus dem ersten öffentlichen Gesamtschlüssel zu extrahieren;

die Signaturanforderung an den ersten Backend-Server weiterzuleiten, der der ersten Serverkennung entspricht;

als Antwort auf das Bestimmen, dass der erste Backend-Server nicht verfügbar ist, die kryptographisch eingebettete zweite Serverkennung aus dem zweiten öffentlichen Gesamtschlüssel zu extrahieren und die Signaturanforderung an den zweiten Backend-Server weiterzuleiten, der der zweiten Serverkennung entspricht;

eine zweite Signatur an den Anwendungsserver weiterzuleiten; und wobei der erste und der zweite Backend-Server jeweils dazu eingerichtet sind:

die Signaturanforderung an eine Vielzahl von entfernten Sicherheitsvorrichtungen weiterzuleiten, die dem öffentlichen Gesamtschlüssel zugeordnet sind;

eine erste Signatur von jeder der Vielzahl von entfernten Sicherheitsvorrichtungen zu empfangen;

eine kombinierte Signatur auf der Grundlage der ersten Signaturen zu erzeugen;

die zweite Signatur auf der Grundlage der kombinierten Signatur und eines abschließenden Schlüssels zu erzeugen, wobei der abschließende Schlüssel auf der Grundlage der Serverkennung des Backend-Servers kryptografisch erzeugt wird; und

die zweite Signatur an den Frontend-Server weiterzuleiten.

2. Das System nach Anspruch 1, wobei kombinierte Signatur unter Verwendung eines Signaturschemas für zusammengesetzte Schlüssel erzeugt wird.

3. Das System nach Anspruch 1, wobei die kombinierte Signatur unter Verwendung eines Signaturschemas für kombinierte Schlüssel erzeugt wird.

4. Das System nach Anspruch 1, wobei der Frontend-Server bestimmt, dass der erste Backend-Server nicht verfügbar ist, wenn der Frontend-Server keine Bestätigung vom ersten Backend-Server als Antwort auf das Weiterleiten der Signaturanforderung empfängt.

5. Das System nach Anspruch 1, wobei der Frontend-Server bestimmt, dass der erste Backend-Server nicht verfügbar ist, wenn der Frontend-Server die zweite Signatur nicht innerhalb eines Schwellenwertzeitraums empfängt.

6. Ein System zum Erzeugen einer digitalen Signatur, umfassend:

einen ersten Backend-Server;
einen zweiten Backend-Server;
einen ersten Frontend-Server;
einen zweiten Frontend-Server und
eine Zertifizierungsstelle;
wobei die Zertifizierungsstelle dazu eingerichtet ist, als Antwort auf den Empfang einer Zertifikats anforderung von einem Anwendungsserver, die eine Benutzerkennung enthält, ein erstes Zertifikat mit einem ersten öffentlichen Schlüssel und ein zweites Zertifikat mit einem zweiten öffentlichen Schlüssel an den Anwendungsserver weiterzuleiten, wobei das erste und das zweite Zertifikat der Benutzerkennung zugeordnet sind;
wobei der erste und der zweite Frontend-Server jeweils dazu eingerichtet sind,

eine Signaturanforderung vom Anwendungsserver zu empfangen, wobei die Signaturanforderung den ersten öffentlichen Schlüssel mit einer kryptographisch eingebetteten ersten Serverkennung und den zweiten öffentlichen Schlüssel mit einer kryptographisch eingebetteten zweiten Serverkennung enthält;

die kryptographisch eingebettete erste Serverkennung aus dem ersten öffentlichen Schlüssel zu extrahieren;

die Signaturanforderung an den ersten Backend-Server weiterzuleiten, der der ersten Serverkennung entspricht;

als Antwort auf das Bestimmen, dass der erste Backend-Server nicht verfügbar ist, die kryptographisch eingebettete zweite Serverkennung aus dem zweiten öffentlichen Schlüssel zu extrahieren und die Signaturanforderung an den zweiten Backend-Server weiterzuleiten, der der zweiten Serverkennung entspricht;

eine zweite Signatur an den Anwendungsserver weiterzuleiten; und

wobei der erste Backend-Server und der zweite Backend-Server jeweils dazu eingerichtet sind:

die Signaturanforderung an eine Vielzahl von entfernten Sicherheitsvorrichtungen weiterzuleiten, die dem öffentlichen Gesamtschlüssel zugeordnet sind;

eine erste Signatur von jeder der Vielzahl von entfernten Sicherheitsvorrichtungen zu empfangen;

eine kombinierte Signatur auf der Grundlage der ersten Signaturen zu erzeugen;

die zweite Signatur auf der Grundlage der kombinierten Signatur und eines abschließenden Schlüssels zu erzeugen, wobei der abschließende Schlüssel auf der Grundlage der Serverkennung des Backend-Servers kryptografisch erzeugt wird; und
die zweite Signatur an den Frontend-Server weiterzuleiten.

7. Das System nach Anspruch 6, wobei kombinierte Signatur unter Verwendung eines Signaturschemas für zusammengesetzte Schlüssel erzeugt wird.

8. Das System nach Anspruch 6, wobei die kombinierte Signatur unter Verwendung eines Signaturschemas für kombinierte Schlüssel erzeugt wird.

9. Das System nach Anspruch 6, wobei der Frontend-Server bestimmt, dass der erste Backend-Server nicht verfügbar ist, wenn der Frontend-Server keine Bestätigung vom ersten Backend-Server als Antwort auf das Weiterleiten der Signaturanforderung empfängt.

10. Das System nach Anspruch 6, wobei der Frontend-Server bestimmt, dass der erste Backend-Server nicht verfügbar ist, wenn der Frontend-Server die zweite Signatur nicht innerhalb eines Schwellenwertzeitraums empfängt.

11. Das System nach Anspruch 6, wobei die Zertifizierungsstelle ferner dazu eingerichtet ist, als Antwort auf das Bestimmen, dass einer der ersten oder zweiten Backend-Server nicht verfügbar ist, basierend auf dem ersten Zertifikat und dem zweiten Zertifikat ein drittes Zertifikat zu erzeugen, das einem dritten Backend-Server zugeordnet ist.

12. Ein Verfahren zum Erzeugen einer digitalen Signatur, umfassend:

Empfangen einer Signaturanforderung von einem entfernten Anwendungsserver an einem Front-End-Server, wobei die Signaturanforderung einen ersten öffentlichen Gesamtschlüssel mit einer kryptographisch eingebetteten ersten Serverkennung und einen zweiten öffentlichen Gesamtschlüssel mit einer kryptographisch eingebetteten zweiten Serverkennung enthält;
Extrahieren der kryptographisch eingebetteten ersten Serverkennung aus dem ersten öffentlichen Gesamtschlüssel durch den Front-End-Server;
Weiterleiten der Signaturanforderung durch den Frontend-Server an ersten Backend-Server, der der ersten Serverkennung entspricht;
als Antwort auf das Bestimmen, dass der erste Backend-Server nicht verfügbar ist, Extrahieren der kryptografisch eingebetteten zweiten Serverkennung aus dem zweiten öffentlichen Gesamtschlüssel durch den Frontend-Server und Weiterleiten der Signaturanforderung an den zweiten Backend-Server, der der zweiten Serverkennung entspricht;
Weiterleiten der Signaturanforderung durch den ersten oder zweiten Backend-Server an eine Vielzahl von entfernten Sicherheitsvorrichtungen, die dem öffentlichen Gesamtschlüssel zugeordnet sind;
Empfangen einer ersten Signatur von jeder der Vielzahl von entfernten Sicherheitsvorrichtungen durch den ersten oder zweiten Backend-Server;
Erzeugen einer kombinierten Signatur durch den ersten oder zweiten Backend-Server auf der Grundlage der ersten Signaturen;
Erzeugen einer zweiten Signatur durch den ersten oder zweiten Backend-Server auf der Grundlage der kombinierten Signatur und eines abschließenden Schlüssels, wobei der abschließende Schlüssel auf der Grundlage der Serverkennung des Backend-Servers kryptografisch erzeugt wird;
Weiterleiten der zweiten Signatur durch den ersten oder zweiten Backend-Server an den Frontend-Server; und
Weiterleiten der zweiten Signatur durch den Frontend-Server an den Anwendungsserver.

13. Das Verfahren nach Anspruch 12, wobei kombinierte Signatur unter Verwendung eines Signaturschemas für zusammengesetzte Schlüssel erzeugt wird.

14. Das Verfahren nach Anspruch 12, wobei die kombinierte Signatur unter Verwendung eines Signaturschemas für kombinierte Schlüssel erzeugt wird.

15. Das System nach Anspruch 12, wobei das Bestimmen, dass der erste Backend-Server nicht verfügbar ist, das Bestimmen enthält, wann der Frontend-Server keine Bestätigung vom ersten Backend-Server als Antwort auf das Weiterleiten der Signaturanforderung empfängt.

16. Das System nach Anspruch 12, wobei der Frontend-Server bestimmt, dass der erste Backend-Server nicht verfügbar ist, wenn der Frontend-Server die zweite Signatur nicht innerhalb eines Schwellenwertzeitraums empfängt.

**Revendications**

1. Système de génération d'une signature numérique comprenant :

un premier serveur dorsal ;
un deuxième serveur dorsal ;
un serveur frontal configuré pour :

recevoir une demande de signature d'un serveur d'application à distance, la demande de signature comprenant une première clé publique totale avec un premier identifiant de serveur intégré cryptographiquement et une deuxième clé publique totale avec un deuxième identifiant de serveur intégré cryptographiquement ;

extraire le premier identifiant de serveur intégré cryptographiquement de la première clé publique totale ;

transmettre la demande de signature au premier serveur dorsal qui correspond au premier identifiant de serveur ;

en réponse à déterminer que le premier serveur dorsal est indisponible, extraire le deuxième identifiant de serveur intégré cryptographiquement de la deuxième clé publique totale, et transmettre la demande de signature au deuxième serveur dorsal qui correspond au deuxième identifiant de serveur ;

transmettre une deuxième signature au serveur d'application ; et

dans lequel le premier et le deuxième serveur dorsal sont chacun configurés pour :

transmettre la demande de signature à une pluralité de dispositifs de sécurité à distance associés à la clé publique totale ;

recevoir une première signature de chacun des dispositifs de sécurité à distance ;

générer une signature combinée basée sur les premières signatures ;

générer la deuxième signature basée sur la signature combinée et une clé de finalisation, la clé de finalisation étant générée cryptographiquement basée sur l'identifiant de serveur du serveur dorsal ; et

transmettre la deuxième signature au serveur frontal.

2. Le système de la revendication 1, dans lequel la signature combinée est générée utilisant un schéma de signature à clé composite.

3. Le système de la revendication 1, dans lequel la signature combinée est générée utilisant un schéma de signature à clé combinée.

4. Le système de la revendication 1, dans lequel le serveur frontal détermine que le premier serveur dorsal est indisponible lorsque le serveur frontal échoue à recevoir un accusé de réception du premier serveur dorsal en réponse à transmettre la demande de signature.

5. Le système de la revendication 1, dans lequel le serveur frontal détermine que le premier serveur dorsal est indisponible lorsque le serveur frontal échoue à recevoir la deuxième signature dans une période seuil de temps.

6. Système de génération d'une signature numérique comprenant :

un premier serveur dorsal
un deuxième serveur dorsal ;
un premier serveur frontal ;
un deuxième serveur frontal ; et
une autorité de certificat ;
dans lequel l'autorité de certificat est configurée pour, en réponse à recevoir une demande de certificat comprenant un identifiant d'utilisateur d'un serveur d'application, transmettre un premier certificat avec une première clé publique et un deuxième certificat avec une deuxième clé publique au serveur d'application, les premiers et deuxièmes certificats étant associés à l'identifiant d'utilisateur ;
dans lequel les premiers et deuxièmes serveurs frontaux sont chacun configurés pour :

recevoir une demande de signature du serveur d'application, la demande de signature comprenant la première clé publique avec un premier identifiant de serveur intégré cryptographiquement et la deuxième clé publique avec un deuxième identifiant de serveur intégré cryptographiquement ;

extraire le premier identifiant de serveur intégré cryptographiquement de la première clé publique ;

transmettre la demande de signature au premier serveur dorsal qui correspond au premier identifiant de serveur ;

en réponse à déterminer que le premier serveur dorsal est indisponible, extraire le deuxième identifiant de serveur intégré cryptographiquement de la deuxième clé publique et transmettre la demande de signature au deuxième serveur dorsal qui correspond au deuxième identifiant de serveur ;

transmettre une deuxième signature au serveur d'application ; et

dans lequel le premier serveur dorsal et le deuxième serveur dorsal sont chacun configurés pour :

transmettre la demande de signature à une pluralité de dispositifs de sécurité à distance associés à la clé publique totale ;
recevoir une première signature de chacun des dispositifs de sécurité à distance ;
générer une signature combinée basée sur les premières signatures ;
générer la deuxième signature basée sur la signature combinée et une clé de finalisation, la clé de finalisation étant générée cryptographiquement basée sur l'identifiant de serveur du serveur dorsal ; et
transmettre la deuxième signature au serveur frontal.

7. Le système de la revendication 6, dans lequel la signature combinée est générée utilisant un schéma de signature à clé composite.

8. Le système de la revendication 6, dans lequel la signature combinée est générée utilisant un schéma de signature à clé combinée.

9. Le système de la revendication 6, dans lequel le serveur frontal détermine que le premier serveur dorsal est indisponible lorsque le serveur frontal échoue à recevoir un accusé de réception du premier serveur dorsal en réponse à transmettre la demande de signature.

10. Le système de la revendication 6, dans lequel le serveur frontal détermine que le premier serveur dorsal est indisponible lorsque le serveur frontal échoue à recevoir la deuxième signature dans une période seuil de temps.

11. Le système de la revendication 6, dans lequel l'autorité de certificat est en outre configurée pour, en réponse à déterminer que l'un des premiers ou deuxièmes serveurs dorsaux n'est pas disponible, générer un troisième certificat associé à un troisième serveur dorsal basé sur le premier certificat et le deuxième certificat.

12. Méthode de génération d'une signature numérique comprenant :

recevoir, à un serveur frontal, une demande de signature d'un serveur d'application à distance, la demande de signature comprenant une première clé publique totale avec un premier identifiant de serveur intégré cryptographiquement et une deuxième clé publique totale avec un deuxième identifiant de serveur intégré cryptographiquement ;
extraire, par le serveur frontal, le premier identifiant de serveur intégré cryptographiquement de la première clé publique totale ;
transmettre, par le serveur frontal, la demande de signature au premier serveur dorsal qui correspond au premier identifiant de serveur ;
en réponse à déterminer que le premier serveur dorsal est indisponible, extraire, par le serveur frontal, le deuxième identifiant de serveur intégré cryptographiquement de la deuxième clé publique totale et transmettre la demande de signature au deuxième serveur dorsal qui correspond au deuxième identifiant de serveur ;
transmettre, par le premier ou le deuxième serveur dorsal, la demande de signature à une pluralité de dispositifs de sécurité à distance associés à la clé publique totale ;
recevoir, par le premier ou le deuxième serveur dorsal, une première signature de chacun des dispositifs de sécurité à distance ;
générer, par le premier ou le deuxième serveur dorsal, une signature combinée basée sur les premières signatures ;
générer, par le premier ou le deuxième serveur dorsal, une deuxième signature basée sur la signature combinée et une clé de finalisation, la clé de finalisation étant générée cryptographiquement basée sur l'identifiant de serveur du serveur dorsal ;
transmettre, par le premier ou le deuxième serveur dorsal, la deuxième signature au serveur frontal ; et
transmettre, par le serveur frontal, la deuxième signature au serveur d'application.

13. La méthode de la revendication 12, dans laquelle la signature combinée est générée utilisant un schéma de signature à clé composite.

14. La méthode de la revendication 12, dans laquelle la signature combinée est générée utilisant un schéma de signature à clé combinée.

15. Le système de la revendication 12, dans lequel déterminer que le premier serveur dorsal est indisponible comprenant déterminer lorsque le serveur frontal échoue à recevoir un accusé de réception du premier serveur dorsal en réponse à transmettre la demande de signature.

16. Le système de la revendication 12, dans lequel le serveur frontal détermine que le premier serveur dorsal est indisponible lorsque le serveur frontal échoue à recevoir la deuxième signature dans une période seuil de temps.

FIG. 1

FIG. 2

FIG. 3

FIG. 4

FIG. 5

Signing Authority

Public Key

BESID
506

CID
610

608

Certificate Authority

606

104

$f_{50}$

Certification
Statement

$f_3$

Certificate
602

$f_{60}$

Certificate Generator

CA Private Key
604

BESID
506

## FIG. 6A

Signing Authority

Public Key

BESID
506

$f_{20}$

Total Public
Key

CID
610

104

Certificate Authority

606

Certificate Generator

$f_{70}$

Certification
Statement

$f_3$

Certificate
602

608

CA Private Key
604

$f_{60}$

BESID
506

## FIG. 6B

FIG. 7

FIG. 8

FIG. 9

FIG. 10

Start

1102

Receive input from a user
requesting a signature

1104

Retrieve two or more
certificates corresponding to
the user

1106

Send signature request that
includes the certificates to a
primary frontend server

1108

Is the frontend
server available?

No                                                Yes

1114

Another frontend
server?

No

1116

Send signature request that
includes the certificates to
the next frontend server

1118

Generate error

1110

Receive finalized signature

1112

Digitally sign document with
finalized signature

Yes

End

FIG. 11

FIG. 12

FIG. 13

Start

Backend Server                    1402        Security Device                          Security Device              1410

Send signature request the                    Authenticate user                        Authenticate user
user's security module

                                          1406              1404

                                              Generate signature                           1412

                                                                              Generate signature
                      1416                                    1408

Generate combined signature                   Send signature to back end              Send signature to back end
                                              server                                   server

                              1418                                                                    1414

Generate finalized signature

                              1420

Send finalized signature to
front end server

End

FIG. 14

FIG. 15